(19) Europäisches Patentamt
European Patent Office
Office européen des brevets

(11) **EP 4 376 122 A1**

(12) **EUROPEAN PATENT APPLICATION**
published in accordance with Art. 153(4) EPC

(43) Date of publication:
**29.05.2024 Bulletin 2024/22**

(21) Application number: **22911604.1**

(22) Date of filing: **04.11.2022**

(51) International Patent Classification (IPC):
*H01M 4/1395* [(2010.01)]   *H01M 4/1391* [(2010.01)]
*H01M 4/38* [(2006.01)]   *H01M 4/48* [(2010.01)]
*H01M 4/134* [(2010.01)]   *H01M 4/131* [(2010.01)]
*H01M 10/052* [(2010.01)]   *H01M 4/02* [(2006.01)]

(52) Cooperative Patent Classification (CPC):
**H01M 4/622; H01M 4/131; H01M 4/134;**
**H01M 4/386; H01M 4/483; H01M 4/624;**
H01M 10/0525; H01M 2004/021; H01M 2004/027;
Y02E 60/10

(86) International application number:
**PCT/KR2022/017259**

(87) International publication number:
**WO 2023/120966 (29.06.2023 Gazette 2023/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.12.2021 KR 20210185213**

(71) Applicant: **LG Energy Solution, Ltd.**
**Seoul 07335 (KR)**

(72) Inventors:
• **KIM, Young Jae**
**Daejeon 34122 (KR)**
• **KO, Minjin**
**Daejeon 34122 (KR)**
• **LEE, Jaewook**
**Daejeon 34122 (KR)**

(74) Representative: **Hoffmann Eitle**
**Patent- und Rechtsanwälte PartmbB**
**Arabellastraße 30**
**81925 München (DE)**

(54) **ANODE COMPOSITION, LITHIUM SECONDARY BATTERY ANODE COMPRISING SAME, AND LITHIUM SECONDARY BATTERY COMPRISING ANODE**

(57)    The present application relates to a negative electrode composition, a negative electrode for a lithium secondary battery comprising the same, and a lithium secondary battery comprising the negative electrode.

【FIG. 1】

**Description**

[Technical Field]

The present application claims priority to and the benefit of Korean Patent Application No. 10-2021-0185213 filed in the Korean Intellectual Property Office on December 22, 2021, the entire contents of which are incorporated herein by reference.

The present application relates to a negative electrode composition, a negative electrode for a lithium secondary battery comprising the same, and a lithium secondary battery comprising the negative electrode.

[Background Art]

Due to the rapid increase in the use of fossil fuels, the demand for the use of alternative energy or clean energy is increasing, and as a part of this, the field that is being studied most actively is the field of power generation and power storage using electrochemical reaction.

Currently, a secondary battery may be a representative example of an electrochemical device using such electrochemical energy, and its use area is in a trend of gradually expanding.

As mobile device technology development and demand increase, the demand for secondary batteries as an energy source is rapidly increasing. Among these secondary batteries, a lithium secondary battery having high energy density and voltage, a long cycle life, and a low self-discharge rate has been commercialized and widely used. Further, research is being actively conducted on a method for manufacturing a high-density electrode having a higher energy density per unit volume as an electrode for such a high-capacity lithium secondary battery.

In general, a secondary battery is composed of a cathode, an negative electrode, an electrolyte, and a separator. The negative electrode comprises an negative electrode active material for intercalating and deintercalating lithium ions coming out from the cathode, and silicon-based particles having a large discharge capacity may be used as the negative electrode active material.

In particular, according to the recent demand for high-density energy batteries, research on a method of increasing the capacity by using as an negative electrode active material a silicon-based compound together such as Si/C or $SiO_x$, which has a capacity 10 times or more larger than that of a graphite-based material, is being actively conducted. However, in the case of a silicon-based compound, which is a high-capacity material, compared to graphite that has conventionally been used, there is a problem in that the capacity is large, but the volume rapidly expands during the charging process so that the conductive path is cut off to deteriorate the battery properties.

Therefore, in order to solve a problem when using the silicon-based compound as an negative electrode active material, methods of suppressing the volume expansion itself such as a method of controlling the driving potential, a method of additionally further coating a thin film on the active material layer and a method of controlling the particle diameter of the silicon-based compound, or various methods for preventing the conduction path from being cut off are being discussed. However, in the case of the above methods, since the performance of the battery may be rather deteriorated, there is a limit to the application, and there is still a limit to the commercialization of manufacturing an negative electrode battery having a high content of the silicon-based compound.

In particular, research on the composition of the binder according to volume expansion has also been conducted, and research is underway to use binder polymers with strong stress on the side in order to suppress volume expansion caused by charging and discharging of an negative electrode active material having a large volume change. However, these binder polymers alone have had a limit in suppressing the thickness increase of the electrode due to the contraction and expansion of the negative electrode active material and the performance deterioration of the lithium secondary battery derived therefrom.

Further, in order to solve problems due to volume expansion of an negative electrode having the silicon-based active material as described above, an aqueous binder having dispersibility and adhesiveness at the same time is used. In the case of the aqueous binder, there is an advantage in that dispersibility can be improved, but since adhesion is dropped, problems such as electrode detachment phenomenon or the like due to volume expansion of the active material occur.

In addition, a rubber-based binder may also be applied in order to improve adhesion, but in the case of a silicon-based active material, when a rubber-based binder is included, a problem of dispersibility occurs, which is also known to have limitations.

Therefore, even when a high-capacity material is used in order to manufacture a high-capacity battery, it is necessary to study a binder that not only does not cause disconnection of the conductive network due to volume expansion of the active material, but also has excellent adhesion.

<Prior Art Documents>

(Patent Document 1) Japanese Patent Laid-Open Publication No. 2009-080971

[Description]

[Technical Problem]

The present application relates to a negative electrode composition, a negative electrode for a lithium secondary battery comprising the same, and a lithium secondary battery comprising the negative electrode.

[Technical Solution]

An embodiment of the present specification provides a negative electrode composition comprising: a silicon-based active material; a negative electrode conductive material; and a negative electrode binder, wherein the negative electrode binder contains a main binder including an aqueous binder and a secondary binder including a rubber-based binder, the negative electrode binder contains 80 parts by weight or more and 99 parts by weight or less of the main binder and 1 part by weight or more and 20 parts by weight or less of the secondary binder based on 100 parts by weight of the negative electrode binder, and the secondary binder contains 80 parts by weight or more of butadiene (BD) based on 100 parts by weight of the secondary binder.

In another embodiment, there is provided a negative electrode for a lithium secondary battery comprising: a negative electrode current collector layer; and a negative electrode active material layer containing a negative electrode composition according to the present application and formed on one or both surfaces of the negative electrode current collector layer.

Finally, there is provided a lithium secondary battery comprising: a positive electrode; a negative electrode for a lithium secondary battery according to the present application; a separator provided between the positive electrode and the negative electrode; and an electrolyte.

[Advantageous Effects]

The negative electrode composition according to an embodiment of the present disclosure is characterized in that when a silicon-based active material, which is a high-capacity material, is used in order to manufacture a high-capacity battery, a problem caused by volume expansion of the silicon-based active material is solved by applying a specific negative electrode binder.

In particular, the negative electrode binder contains a main binder including an aqueous binder and a secondary binder including a rubber-based binder, the negative electrode binder contains 80 parts by weight or more and 99 parts by weight or less of the main binder and 1 part by weight or more and 20 parts by weight or less of the secondary binder based on 100 parts by weight of the negative electrode binder, and the secondary binder contains 80 parts by weight or more of butadiene (BD) based on 100 parts by weight of the secondary binder.

In the present application, the aqueous based main binder is a polymer chain and serves as a matrix, and the rubber-based secondary binder is provided in the form of particles between the main binders, that is, the rubber-based secondary binder and the water-based main binder are not bonded.

Specifically, the negative electrode composition according to the present application can improve dispersibility for dispersing the active material through the main binder even when a silicon-based active material is used, and can also solve the problem of the conductive network disconnection due to the initial and late adhesion and volume expansion of the battery using the silicon-based active material by comprising a secondary binder of a specific composition in order to improve adhesion.

That is, the negative electrode composition according to the present application has a high content of silicon-based active material particles to enable a high-capacity and high-density negative electrode to be obtained, and at the same time, in order to solve a problem such as volume expansion or the like due to having a high content of the silicon-based active material particles, it is the main object of the present disclosure that the above problem has been solved by using a binder having a specific composition and content.

[Description of Drawings]

FIG. 1 is a diagram illustrating a laminated structure of a negative electrode for a lithium secondary battery according to an embodiment of the present application.

FIG. 2 is a diagram illustrating a laminated structure of a negative electrode for a lithium secondary battery according to an embodiment of the present application..

FIG. 3 is a diagram illustrating a laminated structure of a lithium secondary battery according to an embodiment of the present application.

<Explanation of Reference Numerals and Symbols>

| | |
|---|---|
| 10: | negative electrode current collector layer |
| 20: | negative electrode active material layer |
| 30: | separator |
| 40: | positive electrode active material layer |
| 50: | positive electrode current collector layer |
| 100: | negative electrode for a lithium secondary battery |
| 200: | positive electrode for a lithium secondary battery |

[Best Mode for Carrying Out the Invention]

Before describing the present disclosure, some terms are first defined.

In the present specification, if a prescribed part "includes" a prescribed element, this means that another element can be further included instead of excluding other elements unless any particularly opposite description exists.

In the present specification, 'p to q' means a range of 'p or more and q or less'.

In the present specification, "a specific surface area" is one measured by the BET method, and is specifically calculated from the nitrogen gas adsorption amount under liquid nitrogen temperature (77 K) using BEL Japan's BELSORP-mini II. That is, the BET specific surface area in the present application may mean a specific surface area measured by the above measurement method.

In the present specification, "Dn" refers to a particle size distribution, and refers to a particle diameter at an n% point of the cumulative distribution of the number of particles according to the particle diameter. That is, D50 is the particle diameter (average particle diameter) at a 50% point of the cumulative distribution of the number of particles according to the particle diameter, D90 is the particle diameter at a 90% point of the cumulative distribution of the number of particles according to the particle diameter, and D10 is the particle diameter at a 10% point of the cumulative distribution of the number of particles according to the particle diameter. Meanwhile, the particle size distribution may be measured using a laser diffraction method. Specifically, after dispersing a measurement target powder in a dispersion medium, it is introduced into a commercially available laser diffraction particle size measuring device (e.g., Microtrac S3500) to calculate the particle size distribution by measuring the diffraction pattern difference according to the particle size when the particles pass through the laser beam.

In the present specification, the meaning that a polymer comprises a certain monomer as a monomer unit means that the monomer participates in a polymerization reaction and is contained as a repeating unit in the polymer. In the present specification, when it is said that the polymer comprises a monomer, this is interpreted the same as that the polymer comprises the monomer as a monomer unit.

In the present specification, the term 'polymer' is understood to be used in a broad sense including a copolymer unless specified as a 'homopolymer'.

In the present specification, the weight average molecular weight (Mw) and the number average molecular weight (Mn) are a polystyrene conversion molecular weight obtained by allowing a monodisperse polystyrene polymer (standard sample) of various polymerization degrees commercially available for molecular weight measurement as a standard material to be measured by gel permeation chromatography (GPC). In the present specification, the molecular weight means a weight average molecular weight unless otherwise specified.

Hereinafter, the present disclosure will be described in detail with reference to the drawings so that those of ordinary skill in the art to which the present disclosure pertains can easily practice the present disclosure. However, the present disclosure may be embodied in various different forms and is not limited to the description below.

An embodiment of the present specification provides a negative electrode composition comprising: a silicon-based active material; a negative electrode conductive material; and a negative electrode binder, wherein the negative electrode binder contains a main binder including an aqueous binder and a secondary binder including a rubber-based binder, the negative electrode binder contains 80 parts by weight or more and 99 parts by weight or less of the main binder and 1 part by weight or more and 20 parts by weight or less of the secondary binder based on 100 parts by weight of the negative electrode binder, and the secondary binder contains 80 parts by weight or more of butadiene (BD) based on 100 parts by weight of the secondary binder.

The negative electrode composition according to an embodiment of the present disclosure can improve dispersibility for dispersing the active material through the main binder even when a silicon-based active material is used, and can also solve a problem of the conductive network disconnection due to the initial and late adhesion and volume expansion of the battery using the silicon-based active material by comprising a secondary binder of a specific composition in order to improve adhesion.

In an embodiment of the present application, the silicon-based active material may include one or more selected from the group consisting of Si particles, $SiO_x$ (0<x<2), SiC, and an Si alloy.

The active material of the present disclosure includes a silicon-based active material. The silicon-based active material may be $SiO_x$, Si/C, or Si. $SiO_x$ may include a compound represented by $SiO_x$ (0≤x<2). In the case of $SiO_2$, since it does not react with lithium ions so that lithium cannot be stored, x is preferably within the above range. The silicon-based active material may be Si/C composed of a composite of Si and C, or may be Si. Further, two or more types of the silicon-based active material may be mixed and used. The negative electrode active material may further include a carbon-based active material together with the aforementioned silicon-based active material. The carbon-based active material may contribute to excellent cycle characteristics or the improvement of battery lifespan performance of the negative electrode or secondary battery of the present disclosure.

In general, silicon-based active materials are known to have a capacity 10 times or more higher than that of carbon-based active materials, and accordingly, when the silicon-based active materials are applied to negative electrodes, it is expected that electrodes with a high level of energy density can be realized even with a thin thickness.

In an embodiment of the present application, there is provided a negative electrode composition in which the silicon-based active material includes one or more selected from the group consisting of $SiO_x$ (x=0) and $SiO_x$ (0<x<2), and $SiO_x$ (x=0) is contained in an amount of 70 parts by weight or more based on 100 parts by weight of the silicon-based active material.

In another embodiment, the silicon-based active material may include $SiO_x$ (x=0) in an amount of 70 parts by weight or more, preferably 80 parts by weight or more, and more preferably 90 parts by weight or more, and may include it in an amount of 100 parts by weight or less, preferably 99 parts by weight or less, and more preferably 95 parts by weight or less based on 100 parts by weight of the silicon-based active material.

The silicon-based active material according to the present application includes 70 parts by weight or more of the $SiO_x$ (x=0) based on 100 parts by weight of the silicon-based active material, and when compared with the silicon-based active material using an $SiO_x$ (0<x<2)-based active material as a main material, it has a disadvantage in that the theoretical capacity is much lower than that of the silicon-based active material of the present application. That is, in the case of using the SiOx (0<x<2)-based active material, no matter what treatment is performed on the active material itself, conditions equivalent to charge and discharge capacity cannot be implemented compared with the case of having the silicon-based active material of the present disclosure.

In an embodiment of the present application, pure silicon (Si) in the silicon-based active material may be used as the silicon-based active material. Using pure silicon (Si) as the silicon-based active material may mean including pure Si particles ($SiO_x$ (x=0)) that are not combined with other particles or elements in the above range when the total amount of the silicon-based active material is based on 100 parts by weight as described above.

When comparing the silicon-based active material with the graphite-based active material that has conventionally been used, it has a significantly high capacity so that attempts to apply it are increasing, but the volume expansion rate is high in the charging and discharging process so that it is limited to the case or the like of using a small amount mixed with the graphite-based active material and used.

Therefore, the present disclosure is characterized in that, while using a high content of the silicon-based active material as a negative electrode active material in order to improve capacity performance, a binder under specific conditions is used in order to solve problems of maintaining the conductive path due to the volume expansion as described above and maintaining bonding of the conductive material, the binder, and the active material.

Meanwhile, the silicon-based active material of the present disclosure may have an average particle diameter (D50) of 5 to 10 um, specifically 5.5 to 8 um, and more specifically 6 to 7 um. When the average particle diameter is included in the above range, the specific surface area of the particles is included in a suitable range so that the viscosity of a negative electrode slurry is formed in an appropriate range. Accordingly, the dispersion of the particles constituting the negative electrode slurry is facilitated. Further, since the size of the silicon-based active material has a value greater than or equal to the lower limit value range, the contact area between the silicon particles and the conductive materials is excellent due to a composite consisting of the conductive material and the binder in the negative electrode slurry, and the possibility that the conductive network will continue increases so that the capacity retention rate is increased. On the other hand, when the average particle diameter satisfies the above range, excessively large silicon particles are excluded to form a smooth surface of the negative electrode, thereby enabling a current density non-uniformity phenomenon to be prevented during charging and discharging.

In an embodiment of the present application, the silicon-based active material generally has a characteristic BET specific surface area. The silicon-based active material has a BET specific surface area of preferably 0.01 to 150.0 $m^2/g$, more preferably 0.1 to 100.0 $m^2/g$, particularly preferably 0.2 to 80.0 $m^2/g$, and most preferably 0.2 to 18.0 $m^2/g$. The BET specific surface area is measured in accordance with DIN 66131 using nitrogen.

In an embodiment of the present application, the silicon-based active material may exist in, for example, a crystalline or amorphous form, and is preferably not porous. The silicon particles are preferably spherical or fragmented particles. As an alternative but less preferably, the silicon particles may also have a fiber structure or exist in the form of a silicon-containing film or coating.

In an embodiment of the present application, there is provided a negative electrode composition in which the silicon-based active material is contained in an amount of 60 parts by weight or more based on 100 parts by weight of the negative electrode composition.

In another embodiment, the silicon-based active material may be contained in an amount of 60 parts by weight or more, preferably 65 parts by weight or more, and more preferably 70 parts by weight or more, and may be contained in an amount of 95 parts by weight or less, preferably 90 parts by weight or less, and more preferably 85 parts by weight or less based on 100 parts by weight of the negative electrode composition.

The negative electrode composition according to the present application does not deteriorate the performance of the negative electrode even when containing the silicon-based active material in the above range, and has excellent output characteristics in charging and discharging by using specific conductive material and binder capable of suppressing the volume expansion rate in the charging and discharging process even when a silicon-based active material having a remarkably high capacity is used in the above range.

In an embodiment of the present application, the silicon-based active material may have a non-spherical shape, and its sphericity is, for example, 0.9 or less, for example, 0.7 to 0.9, for example, 0.8 to 0.9, and for example, 0.85 to 0.9.

In the present application, the sphericity is determined by Equation 1-1 below, A is an area, and P is a boundary line.

$$[\text{Equation } 1\text{-}1]$$

$$4\pi A/P^2$$

Conventionally, it has been common to use only a graphite-based compound as a negative electrode active material, but recently, as the demand for high-capacity batteries increases, attempts to mix and use a silicon-based compound in order to increase capacity are increasing. However, in the case of the silicon-based compound, even if the properties of the silicon-based active material itself are adjusted according to the present application as described above, the volume rapidly expands during the charging/discharging process so that a problem of damaging a conductive path formed in the negative electrode active material layer may be partially occurred.

Accordingly, in an embodiment of the present application, the negative electrode conductive material may include one or more selected from the group consisting of a dot type conductive material, a planar conductive material, and a linear conductive material.

In an embodiment of the present application, the dot type conductive material may be used in order to improve conductivity in the negative electrode, and refers to a dot type or sphere type conductive material having conductivity without causing a chemical change. Specifically, the dot type conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and polyphenylene derivatives, and may preferably include carbon black in the aspects of realizing high conductivity and obtaining excellent dispersibility.

In an embodiment of the present application, the dot type conductive material may have a BET specific surface area of 40 $m^2/g$ or more and 70 $m^2/g$ or less, preferably 45 $m^2/g$ or more and 65 $m^2/g$ or less, and more preferably 50 $m^2/g$ or more and 60 $m^2/g$ or less.

In an embodiment of the present application, the dot type conductive material may satisfy a functional group content (volatile matter) of 0.01% or more and 1% or less, preferably 0.01% or more and 0.3% or less, and more preferably 0.01% or more and 0.1% or less.

In particular, when the functional group content of the dot type conductive material satisfies the above range, functional groups exist on the surface of the dot type conductive material so that when water is used as a solvent, the dot type conductive material may be smoothly dispersed in the solvent. In particular, as silicon particles and a specific binder are used in the present disclosure, the functional group content of the dot type conductive material may be lowered, and thus, the present disclosure has an excellent effect on improving dispersibility.

In an embodiment of the present application, it is characterized in that a dot type conductive material having a functional group content in the above range along with the silicon-based active material is contained, and the control of the functional group content may be adjusted depending on the degree of heat treatment of the dot type conductive material.

In an embodiment of the present application, the dot type conductive material may have a particle diameter of 10 to 100 nm, preferably 20 to 90 nm, and more preferably 20 to 60 nm.

In an embodiment of the present application, the conductive material may include a planar conductive material.

The planar conductive material may serve to improve conductivity by increasing surface contact between silicon particles in the negative electrode and suppress the disconnection of the conductive path due to volume expansion at the same time. The planar conductive material may be expressed as a plate-shaped conductive material or a bulk-type conductive material.

In an embodiment of the present application, the planar conductive material may be provided in a form bonded to the surface of the silicon-based particle. Specifically, it may be provided in a form in which the -OH group or -O on the surface of the silicon-based particle and the hydrophilic group of the planar conductive material are bonded to each other.

In an embodiment of the present application, the planar conductive material may include at least one selected from the group consisting of plate-shaped graphite, graphene, graphene oxide, and graphite flakes, and may preferably be plate-shaped graphite.

In an embodiment of the present application, the planar conductive material may have an average particle diameter (D50) of 2 to 7 um, specifically 3 to 6 um, and more specifically 3.5 to 5 um. When the above range is satisfied, dispersion is easy without causing an excessive increase in the viscosity of the negative electrode slurry based on a sufficient particle size. Therefore, the dispersion effect is excellent when performing dispersion using the same equipment and time.

In an embodiment of the present application, there is provided a negative electrode composition in which the planar conductive material has a D10 of 0.5 um or more and 2.0 um or less, a D50 of 2.5 um or more and 3.5 um or less, and a D90 of 6.5 um or more and 15.0 um or less.

In an embodiment of the present application, the planar conductive material may include: a high specific surface area planar conductive material having a high BET specific surface area; or a low specific surface area planar conductive material.

In an embodiment of the present application, the planar conductive material may include: a high specific surface area planar conductive material; or a low specific surface area planar conductive material without limitation, but in particular, since the planar conductive material according to the present application may be affected by dispersion to some extent in electrode performance, it may be particularly preferable to use a low specific surface area planar conductive material that does not cause a problem in dispersion.

In an embodiment of the present application, the planar conductive material may have a BET specific surface area of 1 $m^2/g$ or more.

In another embodiment, the planar conductive material may have a BET specific surface area of 1 $m^2/g$ or more and 500 $m^2/g$ or less, preferably 5 $m^2/g$ or more and 300 $m^2/g$ or less, and more preferably 5 $m^2/g$ or more and 250 $m^2/g$ or less.

The planar conductive material according to the present application may include: a high specific surface area planar conductive material; or a low specific surface area planar conductive material.

In another embodiment, the planar conductive material may be a high specific surface area planar conductive material, and may satisfy a BET specific surface area range of 50 $m^2/g$ or more and 500 $m^2/g$ or less, preferably 80 $m^2/g$ or more and 300 $m^2/g$ or less, and more preferably 100 $m^2/g$ or more and 300 $m^2/g$ or less.

In another embodiment, the planar conductive material may be a low specific surface area planar conductive material, and may satisfy a BET specific surface area range of 1 $m^2/g$ or more and 40 $m^2/g$ or less, preferably 5 $m^2/g$ or more and 30 $m^2/g$ or less, and more preferably 5 $m^2/g$ or more and 25 $m^2/g$ or less.

Other conductive materials may include linear conductive materials such as carbon nanotubes, etc. The carbon nanotubes may be bundle type carbon nanotubes. The bundle type carbon nanotubes may include a plurality of carbon nanotube units. Specifically, herein, the term 'bundle type' refers to, unless otherwise stated, a secondary shape in the form of a bundle or rope, in which a plurality of carbon nanotube units are arranged side by side or entangled so that the axes of the carbon nanotube units in the longitudinal direction are in substantially the same orientation. The carbon nanotube units have a graphite sheet in the form of a cylinder having a nano-size diameter, and have a sp2 bond structure. At this time, the carbon nanotube units may exhibit properties of a conductor or a semiconductor depending on the angle and structure at which the graphite sheet is rolled. The bundle type carbon nanotubes may be uniformly dispersed during the manufacturing of the negative electrode compared to the entangled type carbon nanotubes, and may smoothly form the conductive network in the negative electrode, thereby enabling conductivity of the negative electrode to be improved.

For example, the linear conductive material may be a SWCNT (single-walled carbon nanotube) having a large BET specific surface area, a linear shape, a very small diameter, and a very long length. A linear conductive material such as SWCNT cannot be stretched through dispersion, and has a strong ability to return to its original shape when dried. As a result, since the linear conductive material such as SWCNT has a strong force to return to its original form when dried, it is common to exist in the form of wrapping or connecting the negative electrode active material or the secondary aggregate. Bonding methods can be adsorption by Van der Waals forces.

In an embodiment of the present application, there is provided a negative electrode composition in which the negative electrode conductive material is contained in an amount of 10 parts by weight or more and 40 parts by weight or less based on 100 parts by weight of the negative electrode composition.

In another embodiment, the negative electrode conductive material may be contained in an amount of 10 parts by weight or more and 40 parts by weight or less, preferably 10 parts by weight or more and 30 parts by weight or less, and more preferably 10 parts by weight or more and 25 parts by weight or less based on 100 parts by weight of the negative electrode composition.

In an embodiment of the present application, there is provided a negative electrode composition in which the negative electrode conductive material includes: a planar conductive material; and a linear conductive material.

In an embodiment of the present application, there is provided a negative electrode composition in which the negative electrode conductive material includes 80 parts by weight or more and 99.9 parts by weight or less of the planar conductive material; and 0.1 parts by weight or more and 20 parts by weight or less of the linear conductive material based on 100 parts by weight of the negative electrode conductive material.

In another embodiment, the negative electrode conductive material may include the planar conductive material in an amount of 80 parts by weight or more and 99.9 parts by weight or less, preferably 85 parts by weight or more and 99.9 parts by weight or less, and more preferably 95 parts by weight or more and 98 parts by weight or less based on 100 parts by weight of the negative electrode conductive material.

In another embodiment, the negative electrode conductive material may include the linear conductive material in an amount of 0.1 parts by weight or more and 20 parts by weight or less, preferably 0.1 parts by weight or more and 15 parts by weight or less, and more preferably 2 parts by weight or more and 5 parts by weight or less based on 100 parts by weight of the negative electrode conductive material.

In an embodiment of the present application, as the negative electrode conductive material includes a planar conductive material and a linear conductive material, and satisfies each of the compositions and ratios, the lifespan characteristics of an existing lithium secondary battery are not significantly affected. In particular, when the planar conductive material and the linear conductive material are included, the number of points enabling charging and discharging increases so that the output characteristics are excellent at a high C-rate and characteristics of reducing the amount of high-temperature gas generation are obtained.

The negative electrode conductive material according to the present application has a configuration completely different from the positive electrode conductive material applied to the positive electrode. That is, the negative electrode conductive material according to the present application is one which serves to hold the contact point between silicon-based active materials having a very large volume expansion of the electrode by charging and discharging, and the positive electrode conductive material serves as a buffer of a buffering role when rolled and serves to impart some conductivity, and has a completely different configuration and role from the negative electrode conductive material of the present disclosure.

Further, the negative electrode conductive material according to the present application is applied to the silicon-based active material, and has a configuration completely different from a conductive material applied to a graphite-based active material. That is, since the conductive material used in an electrode having the graphite-based active material simply has small particles compared to the active material, it has the characteristics of improving output characteristics and imparting some conductivity, and the configuration and role thereof are completely different from those of the negative electrode conductive material applied along with the silicon-based active material as in the present disclosure.

In an embodiment of the present application, the planar conductive material used as the above-described negative electrode conductive material has structure and role different from those of the carbon-based active material generally used as the negative electrode active material. Specifically, the carbon-based active material used as the negative electrode active material may be artificial graphite or natural graphite, and refers to a material that is processed into the form of a sphere or dot and used in order to facilitate storage and release of lithium ions.

On the other hand, the planar conductive material used as the negative electrode conductive material is a material having a plane or plate shape, and may be expressed as plate-shaped graphite. That is, the planar conductive material is a material contained in order to maintain a conductive path in the negative electrode active material layer, and it does not mean a material which plays a role of storage and release of lithium, but means a material for securing a conductive path in a planar shape inside the negative electrode active material layer.

That is, in the present application, the fact that plate-shaped graphite has been used as a conductive material means that it has been processed into a planar shape or a plate shape and used as a material that secures a conductive path, not a role of storing or releasing lithium. At this time, the negative electrode active material contained together has high capacity characteristics for lithium storage and release, and plays a role capable of storing and releasing all lithium ions transferred from the positive electrode.

Meanwhile, in the present application, the fact that the carbon-based active material has been used as an active material means that it has been processed into a dot shape or a spherical shape and used as a material that plays a role of storing or releasing lithium.

In an embodiment of the present application, there is provided a negative electrode composition in which the negative electrode binder contains a main binder including an aqueous binder and a secondary binder including a rubber-based binder, contains 85 parts by weight or more and 95 parts by weight or less of the main binder and 5 parts by weight or more and 15 parts by weight or less of the secondary binder based on 100 parts by weight of the negative electrode binder, and the secondary binder contains 80 parts by weight or more of butadiene (BD) based on 100 parts by weight of the secondary binder.

In an embodiment of the present application, the negative electrode binder contains a main binder including an aqueous binder. The main binder is one which has dispersibility for dispersing the negative electrode active material in a negative electrode slurry state containing the negative electrode composition and adhesive force for binding with the negative electrode current collector layer and negative electrode active material layer after drying at the same time, and corresponds to a binder in which the adhesive force is not high. That is, the main binder including the aqueous binder according to the present application may mean a binder having a surface bonding form.

In an embodiment of the present application, the aqueous binder is one which can be dissolved in an aqueous solvent such as water or the like, and may include at least one selected from the group consisting of polyvinyl alcohol (PVA), polyacrylic acid (PAA), polyethylene glycol (PEG), polyacrylonitrile (PAN), and polyacrylamide (PAM). In the aspect of having excellent resistance to volume expansion/contraction of the silicon-based active material, it may include preferably at least one selected from the group consisting of polyvinyl alcohol and polyacrylic acid, more preferably polyvinyl alcohol and polyacrylic acid.

In the aspects of allowing the aqueous binder to be dispersed more well in an aqueous solvent such as water or the like when preparing a negative electrode slurry for forming the negative electrode active material layer, and improving the binding force by coating the active material more smoothly, the aqueous binder may include one in which hydrogen in the aqueous binder is substituted with Li, Na, Ca, or the like.

In an embodiment of the present application, the main binder may have a Young's modulus of $0.3 \times 10^2$ MPa or more.

In another embodiment, the main binder may have a Young's modulus of $0.3 \times 10^2$ MPa or more, preferably $0.5 \times 10^2$ MPa, more preferably $1 \times 10^2$ MPa or more, and $2 \times 10^2$ MPa or less, preferably $1.5 \times 10^2$ MPa or less, more preferably $1.3 \times 10^2$ MPa or less.

In the method of measuring the Young's modulus, the main binder solution is put in a coated bowl and dried at room temperature for a long time to remove moisture. The film blown with moisture is subjected to vacuum drying at 130° C for 10hr according to the electrode drying temperature to obtain a dried film. Thereafter, the dried film may be cut or punched in the form of a sample having a size of 6 mm x 100 mm to collect samples, and the tensile strength (Young's modulus) may be measured using UTM equipment.

The Young's modulus of the main binder is different depending on the measurement method, speed, and measurement condition of the binder, but the Young's modulus of the main binder may mean a value measured in a dry room having a dew point of -5°C to 10°C and a temperature of about 20°C to 22°C.

In this application, the dew point refers to the temperature at which condensation starts at a certain temperature when humid air is cooled, and the partial pressure of water vapor in the air becomes equal to the saturated vapor pressure of water at that temperature. That is, when the temperature of the gas containing water vapor is dropped as it is, it may mean the temperature when the relative humidity becomes 100% and dew begins to form.

The dew point is -5 °C to 10 °C, and the temperature is about 20 °C to 22 °C can generally be defined as a dry room, at which time the humidity corresponds to a very low level.

In the present application, the main binder may be a PAM-based binder. In this case, the PAM-based binder is a binder in which PAM is the main component, and may be used by adjusting the ratio of PAM, PAA, and PAN, and the above Young's modulus can be satisfied by appropriately changing the composition.

The aqueous binder has water-friendly characteristics (hydrophilicity), and has properties that it generally does not dissolve in an electrolyte or an electrolytic solution used in a secondary battery. These characteristics can impart strong stress or tensile strength to the aqueous binder when applied to a negative electrode or a lithium secondary battery, thereby enabling the problem of volume expansion/contraction due to charging and discharging of the silicon-based active material to be effectively suppressed.

In an embodiment of the present application, there is provided a negative electrode composition in which the main binder has a weight average molecular weight of 100,000 g/mol or more and 1,000,000 g/mol or less.

In an embodiment of the present application, the rubber-based binder is a material different from the aqueous binder, and may be defined as one which is not dissolved well in an aqueous solvent such as water or the like, but can be smoothly dispersed in the aqueous solvent. Specifically, the rubber-based binder may include at least one selected from the group consisting of styrene butadiene rubber (SBR), hydrogenated nitrile butadiene rubber (HNBR), acrylonitrile butadiene rubber, acrylic rubber, butyl rubber, and fluororubber, preferably at least one selected from the group consisting of styrene butadiene rubber and hydrogenated nitrile butadiene rubber in the aspects of easy dispersion and excellent phase stability, and more preferably styrene butadiene rubber.

In an embodiment of the present application, there is provided a negative electrode composition comprising 80 parts by weight or more of butadiene (BD) based on 100 parts by weight of the secondary binder.

In another embodiment, butadiene (BD) may be contained in an amount of 80 parts by weight or more, or 81 parts by weight or more, and may satisfy an amount range of 99 parts by weight or less, preferably 90 parts by weight or less based on 100 parts by weight of the secondary binder.

In general, the secondary binder is a material which has very high electrolyte wettability compared to the aqueous binder. When the secondary binder is located near the surface of the silicon-based negative electrode, the negative electrode resistance is lowered since the FEC solvent or $LiPF_6$ salt capable of making an SEI layer can be rapidly supplied.

However, the secondary binder according to the present application contains the above amount of butadiene (BD) based on 100 parts by weight of the secondary binder. An SEI layer is formed on the surface of the negative electrode active material layer depending on the electrolyte, and at this time, the formation of the SEI layer starts from a radical reaction. Butadiene (BD) has a conjugation bond (1.5 bond) in which double bonds and single bonds are rapidly changed, has free radicals present therein, and has high adhesion with an active material.

Therefore, as described in the present application, when butadiene (BD) is contained in the above amount based on 100 parts by weight of the secondary binder, an SEI layer is formed by receiving radicals from the butadiene component contained in a specific part by weight, and since this is connected to the secondary binder, a phenomenon that the SEI layer is detached or broken is prevented, thereby having an advantage of not needing to produce an additional SEI layer. Accordingly, the lithium secondary battery has a feature that an increase in the resistance increase rate of the electrode can be further prevented.

In an embodiment of the present application, since the aqueous binder has a strong stress, when only the aqueous binder is used alone, there is a risk of bending phenomenon of the negative electrode, crack occurrence due to the bending, and deterioration of lifespan characteristics. The rubber-based binder may be well dissolved in an electrolyte or an electrolytic solution generally used in secondary batteries, and when used in combination with an aqueous binder, the stress of the aqueous binder may be relieved to a certain level.

In an exemplary embodiment of the present application, the secondary binder may have a strain of 30% or more, preferably a strain of 100% or more, more preferably a strain of 150% or more, and most preferably a strain of 200% or more, and the strain may be 1000% or less, preferably 900% or less, and more preferably 800% or less.

At this time, the strain value of the secondary binder may be implemented within a range satisfying the aforementioned range by specifically adjusting the ratio of ST/BD of the SBR binder to an appropriate range.

The secondary binder according to the present application is to apply a secondary binder that satisfies the strain value as described above in order to solve the problem of strong stress when only the main binder is used, and accordingly, the stress of the aqueous binder can be alleviated to a certain level when used in combination with the main binder.

In the strain measurement method, the secondary binder solution is put in a coated bowl and dried at room temperature for a long time to remove moisture. The film blown with moisture is subjected to vacuum drying at 130° C. for 10hr according to the electrode drying temperature to obtain a dried film. Thereafter, the dried film may be cut or punched in the form of a sample having a size of 6 mm $\times$ 100 mm to collect samples, and tensile strain may be measured using UTM equipment.

The tensile strain of the secondary binder differs depending on the measurement method, speed, and measurement condition of the binder, but the strain of the secondary binder is the same as the Young's modulus measurement condition of the main binder.

In an exemplary embodiment of the present application, the negative electrode binder including the main binder and the secondary binder may have a Young's modulus of 90 MPa or more and 110 MPa or less, and a strain value of 20% or more and 45% or less.

That is, in order to solve the problem of strong stress when only the main binder is used, a secondary binder that satisfies the above strain value is applied, and accordingly, the entire negative electrode binder has the characteristics of relieving the stress of the aqueous binder to a certain level and securing adhesive strength when the main and secondary binders are used together.

The negative electrode composition of the present disclosure has characteristics capable of enabling the lifespan characteristics to be improved, enabling the warpage problem during manufacturing of a thin film negative electrode to be solved and enabling the adhesive force to be also improved by using a negative electrode binder containing the main binder including the aqueous binder and the secondary binder including the rubber-based binder at a specific weight ratio, thereby effectively solving the volume expansion/contraction problem of the silicon-based active material.

Furthermore, when the negative electrode composition comprises the above-described negative electrode binder, and a planar conductive material and a linear conductive material as a negative electrode conductive material, it has characteristics capable of improving the problem of adhesive force and improving also the internal resistance of the negative electrode at the same time.

In an embodiment of the present application, the negative electrode binder may contain 80 parts by weight or more and 99 parts by weight or less of the main binder and 1 part by weight or more and 20 parts by weight or less of the secondary binder based on 100 parts by weight of the negative electrode binder.

In another embodiment, the negative electrode binder may satisfy an amount range of the main binder of 80 parts by weight or more and 99 parts by weight or less, preferably 87 parts by weight or more and 97 parts by weight or less, and more preferably 89 parts by weight or more and 96 parts by weight or less based on 100 parts by weight of the negative electrode binder.

In another embodiment, the negative electrode binder may contain the secondary binder in an amount of 1 part by weight or more and 20 parts by weight or less, preferably 3 parts by weight or more and 13 parts by weight or less, and more preferably 4 parts by weight or more and 11 parts by weight or less based on 100 parts by weight of the negative electrode binder.

As described above, the negative electrode binder according to the present application is one in which the main binder and the secondary binder satisfy the above contents, and it has characteristics capable of improving dispersibility and also solving the problem of adhesive force even when a silicon-based active material is used.

In an embodiment of the present application, the negative electrode binder may comprise at least any one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluororubber, polyacrylic acid, and a material in which hydrogens thereof are substituted with Li, Na, or Ca, and may also comprise various copolymers thereof.

In an embodiment of the present application, there is provided negative electrode composition in which the negative electrode binder is contained in an amount of 5 parts by weight or more and 30 parts by weight or less based on 100 parts by weight of the negative electrode composition.

In an embodiment of the present application, the negative electrode binder may be contained in an amount of 30 parts by weight or less, preferably 25 parts by weight or less, and more preferably 20 parts by weight or less, and may be contained in an amount of 5 parts by weight or more, or 10 parts by weight or more based on 100 parts by weight of the negative electrode composition.

When an Si-based negative electrode is used compared to the conventional carbon-based negative electrode, the main binder including the aqueous binder is applied in an amount of the above parts by weight so that the secondary binder may be used in a certain range. In particular, the content of butadiene in the secondary binder satisfies the above range so that, although the secondary binder with a low content is contained, the negative electrode binder has characteristics that the bonding strength with the conductive material/binder becomes excellent.

In an embodiment of the present application, there is provided a negative electrode for a lithium secondary battery comprising: a negative electrode current collector layer; and a negative electrode active material layer containing the negative electrode composition according to the present application, which is formed on one or both surfaces of the negative electrode current collector layer.

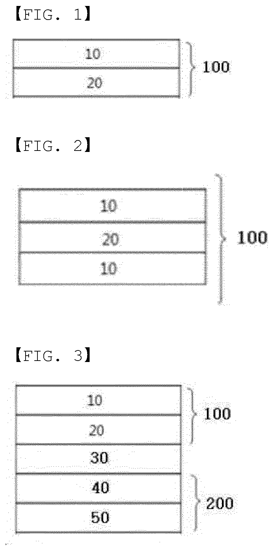

FIG. 1 is a diagram illustrating a laminated structure of a negative electrode for a lithium secondary battery according to an embodiment of the present application. Specifically, the negative electrode for a lithium secondary battery 100 comprising the negative electrode active material layer 20 formed on one surface of the negative electrode current collector layer 10 can be confirmed.

Fig. 2 according to another embodiment shows a laminated structure of a negative electrode for a lithium secondary battery, specifically, it can be confirmed that the negative electrode 100 for a lithium secondary battery including the negative active material layer 20 on both sides of the negative current collector layer 10.

As discussed above, there are two types of negative electrode current collector layers, one in which one side of the negative electrode current collector layer is coated with the negative electrode active material layer (see FIG. 1) and one in which both sides of the negative electrode current collector layer are coated with the negative electrode active material layer (see FIG. 2). At this time, the composition of the negative active material layer coated on both sides may be the same or different.

In one embodiment of the present application, when the negative active material layer is coated on both sides, the negative active material layer including the negative electrode composition according to the present application can be used without limitation as long as only one side of both sides is coated, and on the other side, a generally used silicon-based negative active material or carbon-based negative active material may be included.

In an embodiment of the present application, the negative electrode may form a negative electrode for a lithium secondary battery by coating the negative electrode slurry containing the negative electrode composition on one or both surfaces of the current collector.

In an embodiment of the present application, the negative electrode slurry may contain: a negative electrode composition; and a slurry solvent.

In an embodiment of the present application, the negative electrode slurry may satisfy a solid content of 5% or more and 40% or less.

In another embodiment, the negative electrode slurry may satisfy a solid content range of 5% or more and 40% or less, preferably 7% or more and 35% or less, and more preferably 10% or more and 30% or less.

The solid content of the negative electrode slurry may mean the amount of the negative electrode composition contained in the negative electrode slurry, and may mean the amount of the negative electrode composition based on 100 parts by weight of the negative electrode slurry.

When the negative electrode slurry satisfies the above solid content range, the negative electrode active material layer has a suitable viscosity during the formation of the negative electrode active material layer so that particle agglomeration phenomenon of the negative electrode composition is minimized to have characteristics capable of efficiently forming the negative electrode active material layer.

In an embodiment of the present application, the negative electrode current collector layer generally has a thickness of 1 to 100 um. Such a negative electrode current collector layer is not particularly limited as long as it is one which has high conductivity without causing a chemical change in the concerned battery, and for example, copper, stainless steel, aluminum, nickel, titanium, calcined carbon, one in which the surface of copper or stainless steel is surface-treated with carbon, nickel, titanium, silver, etc., an aluminum-cadmium alloy, etc. may be used. Further, the negative electrode current collector layer may strengthen the bonding force of the negative electrode active material by forming fine irregularities on its surface, and may be used in various forms such as a film, a sheet, a foil, a net, a porous body, a foam, a nonwoven fabric, etc.

In an embodiment of the present application, there is provided a negative electrode for a lithium secondary battery in which the negative electrode current collector layer has a thickness of 1 um or more and 100 $\mu$m or less, and the negative electrode active material layer has a thickness of 20 um or more and 500 um or less.

However, the thickness may be variously modified depending on the type and use of the negative electrode used, but the present disclosure is not limited thereto.

In an embodiment of the present application, the negative electrode active material layer may satisfy a porosity range of 10% or more and 60% or less.

In another embodiment, the negative electrode active material layer may satisfy a porosity range of 10% or more and 60% or less, preferably 20% or more and 50% or less, and more preferably 30% or more and 45% or less.

The porosity is one which is changed depending on the compositions and contents of: the silicon-based active material; the conductive material; and the binder contained in the negative electrode active material layer, particularly one which satisfies the above range according as the silicon-based active material and conductive material according to the present application are contained in specific compositions and amounts, and is characterized in that it has appropriate ranges of electrical conductivity and resistance in the electrode accordingly.

In an embodiment of the present application, there is provided a negative electrode for a lithium secondary battery in which the surface of the negative electrode active material layer in contact with the negative electrode current collector layer satisfies an adhesive force of 290 gf/5 mm or more and 500 gf/5 mm or less under atmospheric pressure condition at 25°C.

In another embodiment, the surface of the negative electrode active material layer in contact with the negative electrode current collector layer may satisfies an adhesive force of 290 gf/5 mm or more and 500 gf/5 mm or less, preferably 290 gf/5 mm or more and 450 gf/5 mm or less, and more preferably 290 gf/5 mm or more and 430 gf/5 mm or less under atmospheric pressure condition at 25°C.

In particular, the negative electrode according to the present application comprises a specific negative electrode binder as the negative electrode composition described above so that the adhesive force is improved as described above. Further, even when the expansion and contraction of the silicon-based active material are repeated by repeating charging and discharging of the negative electrode, it has characteristics capable of suppressing an increase in resistance by applying the negative electrode binder and the negative electrode conductive material of specific compositions to maintain the conductive network and prevent disconnection thereof.

The adhesive force is measured at 90° and a rate of 5 mm/s with a peel strength measuring instrument using a 3M 9070 tape. Specifically, one surface of the negative electrode active material layer of the negative electrode for a lithium secondary battery is adhered to one surface of a slide glass (3M 9070 tape) to which an adhesive film is attached. Thereafter, it is attached by reciprocating a 2 kg rubber roller 5 to 10 times, and the adhesive force (peel force) is measured at a rate of 5 mm/s in an angular direction of 90°. At this time, the adhesive force can be measured at 25°C and atmospheric pressure conditions.

Specifically, the measurement of the adhesive force is made at 25°C and atmospheric pressure conditions with respect to a 5 mm × 15 cm electrode.

In an embodiment of the present application, atmospheric pressure may mean a pressure in a state in which a specific pressure is not applied or lowered, and may be used in the same sense as the atmospheric pressure. In general, it may be expressed as 1 atmosphere.

In an embodiment of the present application, there is provided a lithium secondary battery comprising: a positive electrode; the negative electrode for a lithium secondary battery according to the present application; a separator provided between the positive electrode and the negative electrode; and an electrolyte.

FIG. 3 is a diagram illustrating a laminated structure of a lithium secondary battery according to an embodiment of the present application. Specifically, a negative electrode for a lithium secondary battery 100 comprising a negative electrode active material layer 20 formed on one surface of a negative electrode current collector layer 10 may be confirmed, a lithium secondary battery positive electrode 200 comprising a positive electrode active material layer 40 formed on one surface of a positive electrode current collector layer 50 may be confirmed, and it shows that the negative electrode for a lithium secondary battery 100 and the lithium secondary battery positive electrode 200 are formed in a structure in which they are laminated with a separator 30 being interposed therebetween. In addition, the positive active material layer 40 may be formed on both sides of the positive current collector layer 50 .

In particular, a secondary battery according to an embodiment of the present specification may comprise the above-described negative electrode for a lithium secondary battery. Specifically, the secondary battery may comprise a negative electrode, a positive electrode, a separator interposed between the positive electrode and the negative electrode, and an electrolyte, and the negative electrode is the same as the above-described negative electrode. Since the negative electrode has been described above, a detailed description thereof will be omitted.

The positive electrode may comprise a positive electrode current collector and a positive electrode active material layer which is formed on the positive electrode current collector and contains the positive electrode active material.

In the positive electrode, the positive electrode current collector is not particularly limited as long as it has conductivity without causing a chemical change in the battery, and for example, stainless steel, aluminum, nickel, titanium, calcined carbon, one in which the surface of aluminum or stainless steel is surface-treated with carbon, nickel, titanium, silver, etc., or the like may be used. Further, the positive electrode current collector may typically have a thickness of 3 to 500 um, and may increase adhesive force of the positive electrode active material by forming fine irregularities on the surface of the current collector. For example, it may be used in various forms such as a film, a sheet, a foil, a net, a porous body, a foam, a nonwoven fabric, etc.

The positive electrode active material may be a commonly used positive electrode active material. Specifically, the positive electrode active material may include: a layered compound such as lithium cobalt oxide ($LiCoO_2$), lithium nickel oxide ($LiNiO_2$) or the like, or a compound substituted with one or more transition metals; lithium iron oxides such as $LiFe_3O_4$, etc.; lithium manganese oxides of the formula $Li_{1+c1}Mn_{2-c1}O_4$ ($0 \leq c1 \leq 0.33$), $LiMnO_3$, $LiMn_2O_3$, $LiMnO_2$, etc.; lithium copper oxide ($Li_2CuO_2$); vanadium oxides such as $LiV_3O_8$, $V_2O_3$, $Cu_2V_2O_7$, etc.; Ni site-type lithium nickel oxides represented by the formula $LiNi_{1-c2}M_{c2}O_2$ (where M is at least one selected from the group consisting of Co, Mn, Al, Cu, Fe, Mg, B and Ga, and satisfies $0.01 \leq c2 \leq 0.3$); lithium-manganese composite oxides represented by the formula $LiMn_{2-c3}M_{c3}O_2$ (where, M is at least one selected from the group consisting of Co, Ni, Fe, Cr, Zn and Ta, and satisfies $0.01 \leq c3 \leq 0.1$) or $Li_2Mn_3MO_8$ (where, M is at least one selected from the group consisting of Fe, Co, Ni, Cu, and Zn); $LiMn_2O_4$ in which a part of Li in the formula is substituted with an alkaline earth metal ion; etc., but the present disclosure is not limited thereto. The positive electrode may be Li-metal.

The positive electrode active material layer may contain a positive electrode conductive material and a positive electrode binder together with the above-described positive electrode active material.

At this time, the positive electrode conductive material is one which is used to impart conductivity to the electrode, and in a battery to be configured, a positive electrode conductive material may be used without any particular limitation as long as it has electronic conductivity without causing a chemical change. Specific examples of the positive electrode conductive material may include: graphite such as natural graphite, artificial graphite, or the like; carbon-based materials such as carbon black, acetylene black, ketjen black, channel black, furnace black, lamp black, thermal black, carbon fiber, etc.; metal powders or metal fibers of copper, nickel, aluminum, silver, etc.; conductive whiskers such as zinc oxide, potassium titanate, etc.; conductive metal oxides such as titanium oxide, etc.; conductive polymers such as polyphenylene derivatives, etc.; or the like, and may be used alone or in mixtures of two or more thereof.

Further, the positive electrode binder serves to improve adhesion between positive electrode active material particles and adhesive force between the positive electrode active material and the positive electrode current collector. Specific examples of the positive electrode binder may include polyvinylidene fluoride (PVDF), poly(vinylidene fluoride-hexafluoropropylene) (PVDF-co-HFP) copolymer, polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene propylene diene monomer (EPDM), sulfonated EPDM, styrene butadiene rubber (SBR), fluororubber, various copolymers thereof, or the like, and may be used alone or in mixtures of two or more thereof.

The separator is one which separates the negative electrode and the positive electrode and provides a moving passage of lithium ions, and as long as it is usually used as a separator in a secondary battery, it can be used without any particular limitation. In particular, it is preferable that the separator has excellent electrolyte moisture-containing capability while having low resistance to ion movement of the electrolyte. Specifically, a porous polymer film, for example, a porous polymer film made of polyolefin-based polymers such as ethylene homopolymer, propylene homopolymer, ethylene/butene copolymer, ethylene/hexene copolymer, ethylene/methacrylate copolymer, etc., or a laminated structure of two or more layers thereof may be used. Further, a usual porous nonwoven fabric, for example, a nonwoven fabric made of high-melting point glass fiber, polyethylene terephthalate fiber, etc. may be used. Further, a coated separator containing a ceramic component or a polymer material may be used in order to secure heat resistance or mechanical strength, and may optionally be used in a single-layer or multilayer structure.

Examples of the electrolyte may include, organic liquid electrolytes, inorganic liquid electrolytes, solid polymer electrolytes, gel-type polymer electrolytes, solid inorganic electrolytes, melt-type inorganic electrolytes, etc. which can be used when manufacturing a lithium secondary battery, but the present disclosure is not limited thereto.

Specifically, the electrolyte may comprise a non-aqueous organic solvent and a metal salt.

As the non-aqueous organic solvent, for example, aprotic organic solvents such as N-methyl-2-pyrrolidinone, propylene carbonate, ethylene carbonate, butylene carbonate, dimethyl carbonate, diethyl carbonate, gamma-butyrolactone, 1,2-dimethoxyethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-Dimethyl-2-imidazolidinone, propylene carbonate derivatives, tetrahydrofuran derivatives, ether, methyl propionate, ethyl propionate, etc. may be used.

In particular, ethylene carbonate and propylene carbonate, which are cyclic carbonates, among the carbonate-based organic solvents, are high-viscosity organic solvents, and may be preferably used since they have a high dielectric constant and well dissociate lithium salts. If such cyclic carbonates are mixed with low-viscosity, low-dielectric constant linear carbonates such as dimethyl carbonate and diethyl carbonate at an appropriate ratio, and used, an electrolyte having high electrical conductivity may be prepared, and thus they may be used more preferably.

A lithium salt may be used as the metal salt, the lithium salt is a material that is well soluble in the non-aqueous electrolyte, and for example, one or more selected from the group consisting of F-, Cl-, I-, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, SCN-, and $(CF_3CF_2SO_2)_2N^-$ may be used as anions of the lithium salt.

In addition to the electrolyte components, for the purpose of improving the lifespan characteristics of the battery, suppressing the decrease in battery capacity, improving the discharge capacity of the battery, etc., the electrolyte may further include one or more additives of, for example, haloalkylene carbonate-based compounds such as difluoroethylene carbonate and the like, pyridine, triethyl phosphite, triethanolamine, cyclic ether, ethylenediamine, n-glyme, hexaphosphoric acid triamide, nitrobenzene derivatives, sulfur, quinoneimine dye, N-substituted oxazolidinones, N,N'-substituted imidazolidines, ethylene glycol dialkyl ethers, ammonium salts, pyrrole, 2-methoxyethanol, aluminum trichloride, etc.

An embodiment of the present disclosure provides a battery module including the secondary battery as a unit cell and a battery pack including the battery module. Since the battery module and the battery pack include the secondary battery having high capacity, high rate performance, and cycle characteristics, they may be used as a power source for a medium-to-large sized device selected from the group consisting of an electric vehicle, a hybrid electric vehicle, a plug-in hybrid electric vehicle, and a system for power storage.

[Mode for Invention]

Hereinafter, preferred embodiments are presented to help the understanding of the present disclosure, but the embodiments are merely for exemplifying the present disclosure, and it will be apparent to those skilled in the art that various changes and modifications are possible within the scope and technical spirit of the present disclosure, it goes without saying that such variations and modifications fall within the scope of the appended claims.

**<Preparation Example>**

**<Preparation of Negative electrode compositions>**

Negative electrode compositions satisfying the compositions and contents of Table 1 below were prepared respectively.

[Table 1]

| | Silicon-based active material | | Negative electrode conductive material | | Negative electrode binder | | Negative electrode binder properties |
|---|---|---|---|---|---|---|---|
| | Type | Content | Type | Content | Main binder (Content) | Secondary binder (Content) | Young's modulus (MPa) /Strain(%) |
| Example 1 | Si | 79.5 | SWCNT/plate-shaped conductive material A | 0.4/9.6 | PAM (10) | SBR-1 (0.5) | 102.9/22.1 |
| Example 2 | Si | 78.75 | SWCNT/plate-shaped conductive material A | 0.4/9.6 | PAM (10) | SBR-1 (1.25) | 96.0/45.0 |
| Example 3 | Si | 80 | SWCNT/plate-shaped conductive material A | 0.4/9.6 | PAM (9) | SBR-1 (1) | 97.2/41.0 |
| Example 4 | Si | 79.5 | plate-shaped conductive material A | 10 | PAM (10) | SBR-1 (0.5) | 102.9/22.1 |
| Example 5 | Si | 79.5 | carbon black (dotted conductive material) | 10 | PAM (10) | SBR-1 (0.5) | 102.9/22.1 |
| Example 6 | Si | 79.5 | SWCNT/plate-shaped conductive material A/ Carbon black (dotted conductive material) | 0.4/4.8/ 4.8 | PAM (10) | SBR-1 (0.5) | 102.9/22.1 |
| Comparative Example 1 | Si | 80 | SWCNT/plate-shaped conductive material A | 0.4/9.6 | PAM (10) | - | 108.0/5.0 |
| Comparative Example 2 | Si | 80 | SWCNT/plate-shaped conductive material A | 0.4/9.6 | CMC (3) | SBR-1(7) | 33.1/7.7 |
| Comparative Example 3 | Si | 75 | SWCNT/plate-shaped conductive material A | 0.4/9.6 | PAM (10) | SBR-1(5) | 72.0/125.0 |
| Comparative Example 4 | Si | 80 | SWCNT/plate-shaped conductive material A | 0.4/9.6 | PAM(8) | SBR-2(2) | 86.4/158.6 |
| Comparative Example 5 | Si | 80 | SWCNT/plate-shaped conductive material A | 0.4/9.6 | PAM(10) | SBR-2(0.5) | 102.9/41.6 |
| Comparative Example 6 | Si | 80 | SWCNT/plate-shaped conductive material A | 0.4/9.6 | PAM(10) | SBR-2 (1.25) | 96.0/90.3 |
| Comparative Example 7 | Si | 79.5 | SWCNT/plate-shaped conductive material A | 0.4/9.6 | - | SBR-1 (10.5) | 0.1/365.0 |

In Table 1 above, the silicon-based active material was Si (average particle diameter (D50): 3.5 pm), the plate-shaped conductive materials A had a BET specific surface area of 17 $m^2$/g, a D10 of 1.7 um, a D50 of 3.5 um, and a D90 of 6.8 um, and materials satisfying a BET specific surface area of about 1,000 to 1,500 $m^2$/g and having an aspect ratio of 10,000 or more were used as SWCNTs.

Further, as described in Table 1 above, as the secondary binder, SBR-1, a styrene-butadiene rubber containing a butadiene component of 81%, was used, and SBR-2, a styrene-butadiene rubber containing a butadiene component of 38%, was used. The PAM (polyacrylamide) binder used as the main binder was a binder which had a PDI value of 20 to 50 by having a weight average molecular weight (Mw) of 500,000 to 800,000 g/mol and a number average molecular weight (Mn) of a 100,000 to 400,000 level.

Also, the Young's modulus of PAM is 108MPa (5% strain), SBR-1 has a strain value of 365% (0.1MPa), and SBR-2 has a strain value of 773% (0.15MPa).

In the method of measuring the Young's modulus and strain, the main and secondary binder solutions are placed in a coated bowl and dried at room temperature for a long time to remove moisture. The film blown with moisture is subjected to vacuum drying at 130°C. for 10hr according to the electrode drying temperature to obtain a dried film. Thereafter, the dried film was cut or punched in the form of a sample having a size of 6 mm × 100 mm, and a sample was collected and measured using UTM equipment.

The Young's modulus and strain of the main/secondary binder are different depending on the measurement method, speed, and measurement condition of the binder, but the Young's modulus of the main binder is a value measured in a dry room having a dew point of -5 °C to 10 °C and a temperature of about 20°C to 22 °C.

The binder was in an aqueous form, and the weight average molecular weight and number average molecular weight were measured using aqueous gel permeation chromatography (GPC).

In Table 1 above, the content may mean a weight ratio (parts by weight) of each composition based on 100 parts by weight of the total negative electrode composition.

## Manufacturing of Negative electrodes

Negative electrode slurries were prepared by adding distilled water as a solvent for forming the negative electrode slurry to the negative electrode compositions having the compositions of Table 1 above (solid content concentration of 25% by weight).

Thereafter, the negative electrode slurries were coated to a thickness of 38 um on a 8 um-thick Cu foil in a negative electrode loading amount of 76.34 mg/25 cm$^2$ to form negative electrode active material layers, and then the negative electrode active material layers were dried at 130°C for 12 hours and rolled to a porosity of the negative electrodes of 40%, thereby manufacturing the negative electrodes. (At this time, the negative electrode active material layer was formed on both sides of the Cu foil.)

## <Manufacturing of Secondary Batteries>

Positive electrode slurries (solid content concentration of 78% by weight) were prepared by adding LiNi$_{0.6}$Co$_{0.2}$Mn$_{0.2}$O$_2$ (average particle diameter (D50) : 15 $\mu$m) as a positive electrode active material, carbon black (product name: Super C65, manufacturer: Timcal) as a conductive material, and polyvinylidene fluoride (PVdF) as a binder to N-methyl-2-pyrrolidone (NMP) as a positive electrode slurry-forming solvent at a weight ratio of 97:1.5:1.5.

Positive electrodes (thickness of the positive electrodes: 77 um, porosity of 26%) were manufactured by coating the positive electrode slurries on both surfaces of an aluminum current collector (thickness: 12 um) as a positive electrode current collector in a loading amount of 537 mg/25 cm$^2$, rolling the coated positive electrode slurries, and drying the rolled positive electrode slurries in a vacuum oven at 130°C for 10 hours, thereby forming positive electrode active material layers (thickness: 65 um).

Lithium secondary batteries were manufactured by interposing a polyethylene separator between the positive electrodes and the negative electrodes of Examples 1 to 3 and Comparative Examples 1 to 7 above, and injecting an electrolyte.

The electrolyte was one in which 3% by weight of vinylene carbonate was added to an organic solvent having fluoroethylene carbonate (FEC) and diethyl carbonate (DEC) mixed therein at a volume ratio of 30:70 based on the total weight of the electrolyte, and LiPF$_6$ as a lithium salt was added to a concentration of 1M.

## Experimental Example 1: Evaluation of Electrode Adhesive force

Adhesive force values of the manufactured negative electrodes were evaluated. Specifically, in order to perform evaluation of adhesive force, after adhering the negative electrode active material layers on the surface of the electrode on the slide glass to which the adhesive film was attached and measuring the adhesive strength (peel strength) values at a rate of 5 mm/s in an angular direction of 90°, the measurement results are shown in Table 2 below.

[Table 2]

|  | Electrode adhesive force (gf/5 mm) |
|---|---|
| Example 1 | 363.30 |
| Example 2 | 412.90 |
| Example 3 | 331.79 |
| Example 4 | 322.4 |
| Example 5 | 291.2 |
| Example 6 | 337.9 |
| Comparative Example 1 | 287.21 |
| Comparative Example 2 | 255.73 |
| Comparative Example 3 | 419.50 |
| Comparative Example 4 | 352.60 |
| Comparative Example 5 | 339.54 |
| Comparative Example 6 | 398.41 |
| Comparative Example 7 | 312.11 |

When an excessive amount of the secondary binder, which is a rubber-based binder, is applied compared to the main binder, which is an aqueous binder, the adhesive force increases. That is, the main binder, which is an aqueous binder, corresponds to a material having dispersibility and adhesive force together by dispersing the active material, maintaining the viscosity in the aqueous slurry state, and imparting adhesion with the negative electrode current collector layer after drying. However, the secondary binder, which is a rubber-based binder, corresponds to a binder having only characteristics for increasing adhesive force.

Therefore, as can be confirmed from the results of Table 2 above, it could be confirmed that the electrode adhesive forces of Examples 1 to 6 were all excellent compared to Comparative Example 1 to which only the main binder that was an aqueous binder was applied. However, only the content of the secondary binder cannot be increased unreasonably in order to increase the adhesive force.

The performance of the silicon-based negative electrode (especially, pure Si negative electrode) deteriorates as increased is the number of silicon-based active materials isolated since the network between the active materials is broken due to a high expansion/contraction ratio. Although there is a problem between the active materials, more important is the adhesive force between the active material and the negative electrode current collector layer. If this part is disconnected, the route itself through which electrons can move disappears, which greatly affects the performance.

Therefore, the main binder having high strength rigidity rather than the secondary binder material having a low strength should be included together, and for this reason, the specific ratio of the main and secondary binders of the present disclosure is important for adhesive force and disconnection and isolation and suppression.

Table 2 above was an experiment capable of confirming that the basic negative electrode adhesive force was excellent since Examples 1 to 6 had a certain negative electrode adhesive force range (290 gf/5 mm) or more as results of the simple adhesive force.

In Comparative Example 1, the negative electrode adhesive force was measured to be low since only the main binder, which was an aqueous binder, was contained so that the binder had high rigidity, but did not have high adhesive force. Comparative Example 2 corresponds to a case in which CMC, which is a type of an aqueous binder serving as a dispersant and a thickener, rather than serving as a binder, and a secondary binder are contained. In this case, the rigidity of the binder itself was weak so that, when measuring the adhesive force, an intermediate portion of the negative electrode active material layer, not the negative electrode active material layer and the negative electrode current collector layer, was separated and measured so that the adhesive force was formed low. In such a case as well, it can be evaluated that the binder similarly does not easily suppress the volume expansion of the negative electrode active material.

It can be confirmed that Comparative Examples 3 to 6 above are in a range similar to Examples 1 to 3 in terms of adhesive force by containing both the main binder and the secondary binder, but this is only the view point of adhesive force, and they were evaluated poorly compared to Examples 1 to 6 in the capacity retention rate and resistance increase rate to be described later.

In particular, when comparing Examples 1 to 6, in the case of Example 5 in which the dotted conductive material was applied alone, the binder was impregnated and adsorbed, and thus the adhesive force was evaluated as the lowest among Examples 1 to 6.

Further, Comparative Example 7 corresponds to the case containing only the secondary binder. In this case, similarly as in Comparative Example 2, the binder itself was weak in the rigidity so that, when measuring the adhesive force, the intermediate portion of the negative electrode active material layer, not the negative electrode active material layer and the negative electrode current collector layer, was separated and measured so as to be formed to a low adhesive force. In such a case as well, it could be evaluated that the binder similarly did not easily suppress the volume expansion of the negative electrode active material.

**Experimental Example 2: Mono-cell Lifetime Evaluation**

With respect to the manufactured secondary batteries, lifetime evaluation was performed using an electrochemical charger and discharger, and capacity retention rate was evaluated. The secondary batteries were 1) charged (0.33C CC/CV charge 4.2V 0.05C cut) and discharged (0.33C CC discharge 3.0V cut) as the first cycle, and then 2) charged (1.0C CC/CV charge 4.2V 0.05C cut) and discharged (0.5C CC discharge 3.0V cut) as the second cycle so that charging and discharging were performed from the second cycle under the conditions.

The N-th capacity retention rate was evaluated by Equation below. The results are shown in Table 3 below.

Capacity retention rate (%) = {(discharge capacity in $N_{th}$ cycle)/(discharge capacity in $1_{st}$ cycle)} $\times$ 100

[Table 3]

|  | Capacity retention rate (based on @200cycle) |
|---|---|
| Example 1 | 88.73 |
| Example 2 | 88.07 |
| Example 3 | 86.91 |
| Example 4 | 86.15 |
| Example 5 | 86.62 |
| Example 6 | 87.41 |
| Comparative Example 1 | 85.93 |
| Comparative Example 2 | 82.24 |
| Comparative Example 3 | 85.70 |
| Comparative Example 4 | 85.83 |
| Comparative Example 5 | 84.59 |
| Comparative Example 6 | 85.71 |
| Comparative Example 7 | 68.43 |

The capacity retention rate is an experimental example for determining how much capacity is maintained according to the number of cycles. That is, it is an evaluation result according to how much silicon (Pure Si), an active material, has been isolated or pulverized in the silicon-based negative electrode. In the case of seeing 200 cycles as a criterion, it is a data that can confirm the rate of performance decrease due to the disconnection of the conductive network of the silicon active material.

As in Examples 1 to 6 according to the present application, when the secondary binders are contained in an amount of 1 part by weight or more and 15 parts by weight or less based on the negative electrode binders, since, while the main binders suppress the disconnection between the active materials, the secondary binders increase the adhesive force with the negative electrode current collector layers, thereby reducing the silicon active materials that are disconnected and isolated, it could be confirmed that the capacity retention rates were highly evaluated compared to Comparative Examples 1 to 7.

**Experimental Example 3: Evaluation of Mono-cell Resistance Increase Rate**

With respect to the manufactured secondary batteries, lifespan evaluation was performed using an electrochemical charger and discharger, and resistance measurement was performed at 200 cycles to compare the resistance values at 200 cycles with the resistance value at the initial 0 cycle and confirm the resistance increase rates.

Specifically, resistance evaluation was carried out after the lifespan evaluation 0 cycle and 200 cycles had been completed, and the secondary batteries were fully charged by first performing charging (0.33C CC/CV charge 4.2V 0.05C cut). After setting the charging state to 50% by performing discharging (0.33C CC discharge, cut at 50% capacity of the charging capacity), discharging (2.5C CC discharge, 30s cut) was performed. Thereafter, 200 cycle lifespan evaluation was performed in the same manner, and then the same resistance evaluation was performed.

The resistance calculation was calculated according to Equation below, and the measured results before lifespan evaluation were respectively calculated on the basis of 0 cycle to confirm the resistance value and the resistance increase rate, and the results are shown in Table 4 below.

Resistance (R) = (voltage(V) at rest state before 2.5C discharging-voltage (V) after 30s discharging)/discharging current (A) Resistance increase rate (%) = {(resistance at 200th cycle)/(resistance at first cycle)-1} $\times$ 100

[Table 4]

|  | Resistance (0cycle, mohm) | Resistance (200cycle, mohm) | Resistance increase rate |
|---|---|---|---|
| Example 1 | 0.69521 | 0.79953 | 15.0 |
| Example 2 | 0.70923 | 0.82906 | 16.9 |
| Example 3 | 0.71248 | 0.87542 | 22.9 |
| Example 4 | 0.71781 | 0.86711 | 20.8 |
| Example 5 | 0.71279 | 0.85178 | 19.5 |
| Example 6 | 0.70324 | 0.82771 | 17.7 |
| Comparative Example 1 | 0.76191 | 0.97861 | 28.4 |
| Comparative Example 2 | 0.77993 | 1.14937 | 47.4 |
| Comparative Example 3 | 0.70450 | 0.89213 | 26.4 |
| Comparative Example 4 | 0.75859 | 0.96876 | 45.9 |
| Comparative Example 5 | 0.76241 | 1.10245 | 44.6 |
| Comparative Example 6 | 0.77218 | 1.17521 | 52.2 |
| Comparative Example 7 | 0.98145 | 1.42858 | 45.6 |

The binder according to the present application contains a main binder and a secondary binder at a predetermined ratio, and in particular, the secondary binder contains 80 parts by weight or more of butadiene.

As can be seen in Table 4 above, it can be confirmed that Examples 1 to 6 according to the present application have low resistance increase rates. Meanwhile, in the case of Comparative Examples 1 to 7, it can be confirmed that the resistance increase rates are formed to be higher than those of Examples 1 to 3 of the present disclosure.

As a result, when confirming the results of Experimental Examples 1 to 6 above, Examples 1 to 6 comprising the binder according to the present disclosure had excellent adhesive forces between the negative electrode active material layers and the negative electrode current collector layers, and furthermore had excellent capacity retention rates and resistance increase rates compared to Comparative Examples 1 to 7 above.

In particular, when comparing Examples 1 to 6, the number of connections capable of charging and discharging increases in the case of including a planar conductive material and a linear conductive material (Examples 1 to 3), so it can be seen that the output characteristics are excellent at high C-rate, and it can also be confirmed that the amount of high-temperature gas is reduced.

This can be seen as effects of containing the main binder and the secondary binder at a specific ratio as the binder according to the present disclosure and at the same time using butadiene (BD) in an amount of 80 parts by weight or more of the secondary binder.

**Claims**

1. A negative electrode composition comprising:

   a silicon-based active material;
   a negative electrode conductive material; and
   a negative electrode binder,
   wherein the negative electrode binder contains a main binder including an aqueous binder and a secondary binder including a rubber-based binder, the negative electrode binder contains 80 parts by weight or more and 99 parts by weight or less of the main binder and 1 part by weight or more and 20 parts by weight or less of the secondary binder based on 100 parts by weight of the negative electrode binder, and the secondary binder contains 80 parts by weight or more of butadiene (BD) based on 100 parts by weight of the secondary binder.

2. The negative electrode composition of claim 1, wherein the silicon-based active material is contained in an amount of 60 parts by weight or more based on 100 parts by weight of the negative electrode composition.

3. The negative electrode composition of claim 1, wherein the silicon-based active material includes one or more selected from the group consisting of $SiO_x$ (x=0), $SiO_x$ (0<x<2), SiC, and an Si alloy.

4. The negative electrode composition of claim 1, wherein the silicon-based active material includes one or more selected from the group consisting of $SiO_x$ (x=0) and $SiO_x$ (0<x<2), and $SiO_x$ (x=0) is contained in an amount of 70 parts by weight or more based on 100 parts by weight of the silicon-based active material.

5. The negative electrode composition of claim 1, wherein the negative electrode conductive material is contained in an amount of 10 parts by weight or more and 40 parts by weight or less based on 100 parts by weight of the negative electrode composition.

6. The negative electrode composition of claim 1, wherein the negative electrode conductive material includes: a planar conductive material; and a linear conductive material.

7. The negative electrode composition of claim 6, wherein the negative electrode conductive material includes 80 parts by weight or more and 99.9 parts by weight or less of the planar conductive material; and 0.1 parts by weight or more and 20 parts by weight or less of the linear conductive material based on 100 parts by weight of the negative electrode conductive material.

8. The negative electrode composition of claim 7, wherein the negative electrode binder is contained in an amount of 5 parts by weight or more and 30 parts by weight or less based on 100 parts by weight of the negative electrode composition.

9. The negative electrode composition of claim 1, wherein the main binder has a weight average molecular weight of 100,000 g/mol or more and 1,000,000 g/mol or less.

10. The negative electrode composition of claim 1, wherein the aqueous binder includes at least one selected from the group consisting of polyvinyl alcohol (PVA), polyacrylic acid (PAA), polyethylene glycol (PEG), polyacrylonitrile (PAN), and polyacrylamide (PAM).

11. The negative electrode composition of claim 1, wherein the rubber-based binder includes at least one selected from the group consisting of styrene butadiene rubber (SBR), hydrogenated nitrile butadiene rubber (HNBR), acrylonitrile butadiene rubber, acrylic rubber, butyl rubber, and fluororubber.

12. A negative electrode for a lithium secondary battery comprising:

a negative electrode current collector layer; and
a negative electrode active material layer containing the negative electrode composition according to any one of claims 1 to 11 and formed on one or both surfaces of the negative electrode current collector layer.

13. The negative electrode for a lithium secondary battery of claim 12, wherein the surface of the negative electrode active material layer in contact with the negative electrode current collector layer satisfies an adhesive force of 290 gf/5 mm or more and 500 gf/5 mm or less under atmospheric pressure condition at 25°C.

14. The negative electrode for a lithium secondary battery of claim 12, wherein the negative electrode current collector layer has a thickness of 1 um or more and 100 um or less, and the negative electrode active material layer has a thickness of 20 um or more and 500 um or less.

15. A lithium secondary battery comprising:

a positive electrode;
the negative electrode for a lithium secondary battery according to claim 12;
a separator provided between the positive electrode and the negative electrode; and
an electrolyte.

【FIG. 1】

| | |
|---|---|
| 10 | |
| 20 | |

100

【FIG. 2】

| |
|---|
| 10 |
| 20 |
| 10 |

100

【FIG. 3】

| |
|---|
| 10 |
| 20 |
| 30 |
| 40 |
| 50 |

100

200

## INTERNATIONAL SEARCH REPORT

| International application No. |
| --- |
| **PCT/KR2022/017259** |

### A. CLASSIFICATION OF SUBJECT MATTER

**H01M 4/1395**(2010.01)i; **H01M 4/1391**(2010.01)i; **H01M 4/38**(2006.01)i; **H01M 4/48**(2010.01)i; **H01M 4/134**(2010.01)i; **H01M 4/131**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/1395(2010.01); C08L 33/08(2006.01); H01M 10/052(2010.01); H01M 10/42(2006.01); H01M 4/134(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(negative electrode), 실리콘계 활물질(silicon based active material), 도전재 (conductive material), 수계 바인더(water based binder), 고무계 바인더(rubber based binder), 리튬 이차전지(lithium secondary battery)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2020-0109141 A (LG CHEM, LTD.) 22 September 2020 (2020-09-22) See paragraphs [0022], [0058] and [0130]; and example 1. | 1-5,8-15 |
| Y | | 6,7 |
| Y | KR 10-2020-0089568 A (LG CHEM, LTD.) 27 July 2020 (2020-07-27) See example 1. | 6,7 |
| A | KR 10-2021-0034984 A (LG CHEM, LTD.) 31 March 2021 (2021-03-31) See entire document. | 1-15 |
| A | US 2014-0255777 A1 (SAMSUNG SDI CO., LTD.) 11 September 2014 (2014-09-11) See entire document. | 1-15 |

☑ Further documents are listed in the continuation of Box C.          ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **27 February 2023** | **27 February 2023** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2022/017259** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2021-0041684 A (HYUNDAI MOTOR COMPANY et al.) 16 April 2021 (2021-04-16)<br>    See entire document. | 1-15 |

Form PCT/ISA/210 (second sheet) (July 2022)

**INTERNATIONAL SEARCH REPORT**
**Information on patent family members**

International application No.

**PCT/KR2022/017259**

| Patent document cited in search report | | | Publication date (day/month/year) | Patent family member(s) | | | Publication date (day/month/year) |
|---|---|---|---|---|---|---|---|
| KR | 10-2020-0109141 | A | 22 September 2020 | CN | 113632260 | A | 09 November 2021 |
| | | | | EP | 3863084 | A1 | 11 August 2021 |
| | | | | EP | 3863084 | A4 | 01 December 2021 |
| | | | | US | 2022-0013784 | A1 | 13 January 2022 |
| | | | | WO | 2020-185014 | A1 | 17 September 2020 |
| KR | 10-2020-0089568 | A | 27 July 2020 | CN | 113692657 | A | 23 November 2021 |
| | | | | EP | 3893295 | A1 | 13 October 2021 |
| | | | | EP | 3893295 | A4 | 16 February 2022 |
| | | | | KR | 10-2439661 | B1 | 02 September 2022 |
| | | | | US | 2022-0149376 | A1 | 12 May 2022 |
| | | | | WO | 2020-149682 | A1 | 23 July 2020 |
| KR | 10-2021-0034984 | A | 31 March 2021 | CN | 114270571 | A | 01 April 2022 |
| | | | | EP | 4002546 | A1 | 25 May 2022 |
| | | | | JP | 2022-547282 | A | 11 November 2022 |
| | | | | US | 2022-0285744 | A1 | 08 September 2022 |
| | | | | WO | 2021-060803 | A1 | 01 April 2021 |
| US | 2014-0255777 | A1 | 11 September 2014 | CN | 104037420 | A | 10 September 2014 |
| | | | | CN | 104037420 | B | 01 June 2018 |
| | | | | EP | 2775556 | A1 | 10 September 2014 |
| | | | | EP | 2775556 | B1 | 16 October 2019 |
| | | | | KR | 10-2014-0110641 | A | 17 September 2014 |
| | | | | US | 9231254 | B2 | 05 January 2016 |
| KR | 10-2021-0041684 | A | 16 April 2021 | None | | | |

Form PCT/ISA/210 (patent family annex) (July 2022)

**REFERENCES CITED IN THE DESCRIPTION**

**Patent documents cited in the description**

- KR 1020210185213
- JP 2009080971 A